# FASCICULE DE BREVET EUROPEEN

(11) **EP 0 518 734 B1**
(45) Date de publication et mention de la délivrance du brevet: **06.09.1995**
(21) Numéro de dépôt: 92401523.3
(22) Date de dépôt: 04.06.1992
(51) Int. Cl.: G05D 1/00, B64D 43/00

(54) **Procédé de signalisation d'insuffisance de manoeuvrabilité d'un aéronef et dispositif mettant en oeuvre un tel procédé**
Verfahren zur Anzeige einer ungenügenden Manövrierbarkeit eines Flugzeugs und Anordnung zur Durchführung eines solchen Verfahrens
Method for indicating an insufficient manoeuvrability of an aircraft and device for achieving this method

(30) Priorité: 14.06.1991 FR 9107335
(43) Date de publication de la demande: 16.12.1992
(73) Titulaire: AEROSPATIALE Société Nationale Industrielle, 75781 Paris Cédex 16 (FR)
(72) Inventeur: Fabre, Pierre, F-31300 Toulouse (FR)
(74) Mandataire: Bonnetat, Christian

(56) Documents cités:
- EP-A- 0 297 939
- WO-A-89/06411
- US-A- 4 855 738
- TRANSACTIONS OF THE INSTITUTE OF MEASUREMENT AND CONTROL vol. 8, no. 1, 1 Mars 1986, London,GB;pages 17 - 23; D.MCLEAN:"A novel system for in-flight detection of wind shear"

## Description

La présente invention concerne un procédé et un dispositif permettant de signaler une insuffisance de manoeuvrabilité d'un aéronef.

La manoeuvrabilité d'un aéronef en vol est définie par son aptitude à rejoindre rapidement un palier sous la seule action de ses gouvernes de profondeur. Cette manoeuvrabilité définit ainsi une marge de sécurité permettant à l'aéronef de faire face à toute nécessité d'évolution de sa trajectoire, ceci avec d'autant plus de facilité que cette marge de sécurité est élevée. Une façon de tenter de garantir cette marge est de maintenir la vitesse au-dessus de la vitesse de décrochage, ce qui assure à l'aéronef un certain appui aérodynamique sur l'air. Cependant, ceci nécessite que le pilote s'assure en permanence du respect de cette vitesse minimale, ce qui lui impose une attention permanente ou au moins épisodique. De plus, ce critère de vitesse ne traduit pas de façon parfaite cette marge de sécurité, ou marge de manoeuvrabilité, par rapport à un seuil minimum, car la vitesse n'est pas la seule grandeur jouant sur cette marge de manoeuvrabilité.

La présente invention vise à diminuer la charge de travail du pilote et à fournir une indication plus précise de la marge de manoeuvre de l'aéronef. Elle vise aussi à permettre une optimisation continue de la marge de manoeuvrabilité de l'aéronef.

A cet effet, selon l'invention, le procédé pour la signalisation d'une insuffisance de manoeuvrabilité d'un aéronef, est remarquable en ce que :
- dans une phase préparatoire, à l'aide d'une pluralité N de configurations de vol de l'aéronef, simulées, calculées ou réelles,
   a) on détermine des relations linéaires entre une première, une deuxième et une troisième grandeur G1, G2 et G3, respectivement relatives à l'accélération verticale dudit aéronef, à l'angle de pente de la trajectoire dudit aéronef par rapport à l'horizontale, et au risque de décrochage dudit aéronef, en pondérant relativement entre elles les valeurs instantanées respectives G1i, G2i et G3i (i = 1,2,...,j,k,...,N) de ces trois grandeurs par des coefficients respectifs A, B et C tels que, lorsque la marge de manoeuvrabilité est estimée être insuffisante pour les valeurs considérées G1j, G2j et G3j desdites trois grandeurs, la somme pondérée Dj = A.G1j + B.G2j + C.G3j soit inférieure à toute autre somme pondérée DT = A.G1k + B.G2k + C.G3K pour laquelle la marge de manoeuvrabilité est estimée être suffisante pour des valeurs G1T, G2k et G3k desdites grandeurs G1, G2 et G3 ;
   b) on choisit une valeur DO de seuil d'insuffisance de manoeuvrabilité SIM supérieure à toute valeur d'une somme pondérée Dj pour laquelle la marge de manoeuvrabilité est insuffisante, et inférieure à toute valeur Dk pour laquelle la marge de manoeuvrabilité est suffisante ;
- puis, dans une phase d'exploitation en vol :
   c) on mesure simultanément les valeurs instantanées desdites première, deuxième et troisième grandeurs G1, G2 et G3 et on calcule la somme desdites première, deuxième et troisième grandeurs G1, G2 et G3 respectivement pondérées par les coefficients de pondération A, B et C ; et
   d) on compare ladite somme à ladite valeur DO de seuil d'insuffisance de manoeuvrabilité SIM et on engendre un signal d'insuffisance de manoeuvrabilité IM si ladite somme est inférieure à ladite valeur DO de seuil d'insuffisance de manoeuvrabilité SIM.

On peut ainsi, après avoir effectué, dans une phase préliminaire, des mesures desdites grandeurs dans diverses configurations de vol, déterminer, au moyen d'un calcul simple utilisant un nombre limité de grandeurs qui sont prises indépendamment l'une de l'autre, si la marge de manoeuvrabilité est suffisante ou pas, et engendrer un signal d'insuffisance de manoeuvrabilité, si nécessaire. Ce signal, à la disposition du pilote, peut être représentatif de la marge quantifiée de manoeuvrabilité ou être un signal "tout ou rien" indiquant l'insuffisance de manoeuvrabilité.

Ladite troisième grandeur G3 peut représenter la vitesse de l'aéronef par rapport au sol. Cette grandeur est déjà disponible à bord de l'aéronef, ce qui ne nécessite donc pas d'indicateur supplémentaire. Cette troisième grandeur G3 peut, en variante, représenter l'angle d'incidence α de l'aéronef.

Cette grandeur est aussi disponible à bord de l'aéronef.

De plus, de façon à optimiser la sensibilité de la somme pondérée desdites grandeurs vis-à-vis de ces grandeurs, le procédé selon l'invention permet de décaler le zéro de certaines desdites première, deuxième et troisième grandeurs G1, G2 et G3.

On peut ainsi s'affranchir de la référence du zéro de l'indicateur correspondant, et affiner la détermination des coefficients de pondération en optimisant la sensibilité de la somme pondérée desdites grandeurs vis-à-vis de ces grandeurs.

On peut aussi, en vue de limiter une influence excessive d'une ou plusieurs grandeurs, écrêter certaines desdites première, deuxième et troisième grandeurs G1, G2 et G3 d'au moins un côté de leur plage de variation.

Cela permet d'éliminer l'influence prépondérante de l'une de ces grandeurs qui aurait une valeur élevée, et qui masquerait une valeur insuffisante des autres grandeurs.

De plus, le procédé selon l'invention permet d'avoir un signal d'insuffisance de manoeuvrabilité IM qui contient une information indiquant l'amplitude de ladite insuffisance de manoeuvrabilité.

Le pilote peut ainsi connaître l'amplitude de l'écart par rapport audit seuil d'insuffisance de manoeuvrabilité SIM, et peut ainsi avoir connaissance du sens de variation de cet écart, ce qui permet de juger de l'efficacité d'une manoeuvre tendant à rétablir la marge de sécurité.

Ce procédé de signalisation d'insuffisance de manoeuvrabilité d'un aéronef peut être appliqué à l'asservissement d'un dispositif de commande de vol d'un aéronef, ledit signal d'insuffisance de manoeuvrabilité IM étant utilisé par ledit dispositif de commande de vol.

Ce dispositif de commande de vol est ainsi informé de la valeur de l'écart par rapport au seuil d'insuffisance de manoeuvrabilité, et il peut réagir en conséquence, d'autant plus qu'il perçoit le sens et la vitesse de variation dudit signal d'insuffisance de manoeuvrabilité.

En particulier, ledit dispositif de commande de vol peut agir essentiellement sur celles desdites grandeurs dont la valeur s'écarte nettement d'une valeur limite propre prédéterminée.

Cela permet ainsi de corriger d'abord les valeurs des grandeurs qui s'écartent beaucoup d'une valeur normale.

De plus, ledit dispositif de commande de vol peut agir sur lesdites grandeurs pour optimiser la marge de manoeuvrabilité.

Cela permet, en permanence, de maintenir une marge de manoeuvrabilité optimale.

Pour mettre en oeuvre ledit procédé, un dispositif de signalisation d'insuffisance de manoeuvrabilité d'un aéronef comportant un premier indicateur, apte à fournir une première grandeur G1 relative à l'accélération verticale dudit aéronef, un deuxième indicateur, apte à fournir une deuxième grandeur G2 relative à l'angle de pente de la trajectoire dudit aéronef par rapport à l'horizontale, et un troisième indicateur, apte à fournir une troisième grandeur G3 relative au risque de décrochage dudit aéronef,
est remarquable en ce qu'il comporte :
- un premier, un deuxième et un troisième multiplieur, recevant respectivement lesdites première, deuxième et troisième grandeurs G1,G2,G3, aptes à multiplier respectivement ladite grandeur reçue par un premier, un deuxième et un troisième coefficient prédéterminé, et aptes à fournir, respectivement, un premier, un deuxième et un troisième résultat ;
- un additionneur algébrique, recevant respectivement, sur trois entrées, lesdits premier, deuxième et troisième résultats et apte à fournir une somme correspondant à la sommation des valeurs appliquées auxdites trois entrées ;
- un comparateur recevant, sur une première entrée, ladite somme, et, sur une seconde entrée, une valeur DO prédéterminée de seuil d'insuffisance de manoeuvrabilité SIM, et apte à fournir, en sortie, un signal d'insuffisance de manoeuvrabilité IM si ladite somme diffère de ladite valeur (DO) prédéterminée de seuil d'insuffisance de manoeuvrabilité (SIM), dans un sens tel que, lorsque la vitesse dudit aéronef par rapport au sol décroît, la valeur de ladite somme s'éloigne de ladite valeur (DO) de seuil d'insuffisance de manoeuvrabilité (SIM).

Ledit procédé est ainsi mis en oeuvre de façon très simple sans nécessité de calculs longs ou complexes.

De même, ledit procédé peut être mis en oeuvre par un dispositif de signalisation d'insuffisance de manoeuvrabilité d'un aéronef comportant un premier indicateur apte à fournir une première grandeur G1 relative à l'accélération verticale dudit aéronef, un deuxième indicateur, apte à fournir une deuxième grandeur G2 relative à l'angle de pente de la trajectoire dudit aéronef par rapport à l'horizontale, et un troisième indicateur apte à fournir une troisième grandeur G3 relative au risque de décrochage dudit aéronef, et est remarquable en ce qu'il comporte :
- un premier et un deuxième multiplieur, recevant respectivement une parmi lesdites première, deuxième et troisième grandeurs G1, G2 et G3, aptes à multiplier respectivement ladite grandeur reçue par un premier et un deuxième coefficient prédéterminé, et aptes à fournir, respectivement, un premier résultat et un deuxième résultat ;
- un additionneur algébrique, recevant respectivement, sur trois entrées, lesdits premier et deuxième résultats et celle, parmi lesdites première, deuxième et troisième grandeurs G1, G2 et G3, que ne reçoivent pas lesdits premier et deuxième multiplieurs, et apte à fournir une somme correspondant à la sommation des valeurs appliquées auxdites trois entrées ;
- un comparateur recevant, sur une première entrée, ladite somme, et, sur une seconde entrée, une valeur prédéterminée de seuil d'insuffisance de manoeuvrabilité SIM, et apte à fournir, en sortie, un signal d'insuffisance de manoeuvrabilité IM si ladite somme diffère de ladite valeur prédéterminée de seuil d'insuffisance de manoeuvrabilité SIM, dans un sens tel que, lorsque la vitesse dudit aéronef par rapport au sol décroît, la valeur de ladite somme s'éloigne de ladite valeur de seuil d'insuffisance de manoeuvrabilité SIM.

Un tel dispositif permet ainsi de mettre en oeuvre ledit procédé, sous une forme de réalisation très simple, pouvant utiliser des circuits de calcul pré-existants.

De plus, lesdits dispositifs de signalisation d'insuffisance de manoeuvrabilité d'un aéronef peuvent comporter au moins un écrêteur, apte à limiter la plage de variation de l'une desdites première, deuxième ou troisième grandeurs G1, G2, G3.

Cela évite ainsi la prise en compte d'une valeur trop élevée qui masquerait des valeurs insuffisantes des autres grandeurs.

De même, lesdits dispositifs de signalisation d'insuffisance de manoeuvrabilité d'un aéronef peuvent comporter au moins un circuit de décalage apte à décaler la référence du zéro de l'une desdites première, deuxième ou troisième grandeurs G1, G2, G3.

On peut ainsi s'affranchir de la position du zéro liée aux indicateurs, et aussi optimiser l'influence de chacune desdites grandeurs dans la somme pondérée.

Les figures du dessin annexé feront bien comprendre comment l'invention peut être réalisée. Sur ces figures, des références identiques désignent des éléments semblables.

La figure 1 représente un aéronef en vol, comportant des indicateurs fournissant des grandeurs caractérisant sa manoeuvrabilité.

La figure 2 est une représentation schématique des circuits permettant de mettre en oeuvre, selon l'invention, le procédé de traitement des grandeurs fournies par lesdits indicateurs, pour fournir un signal d'insuffisance de manoeuvrabilité.

La figure 3 est une représentation schématique des circuits permettant de mettre en oeuvre une première variante du traitement effectué en regard de la figure 2.

La figure 4 est une représentation schématique des circuits permettant de mettre en oeuvre une seconde variante du traitement effectué en regard de la figure 2.

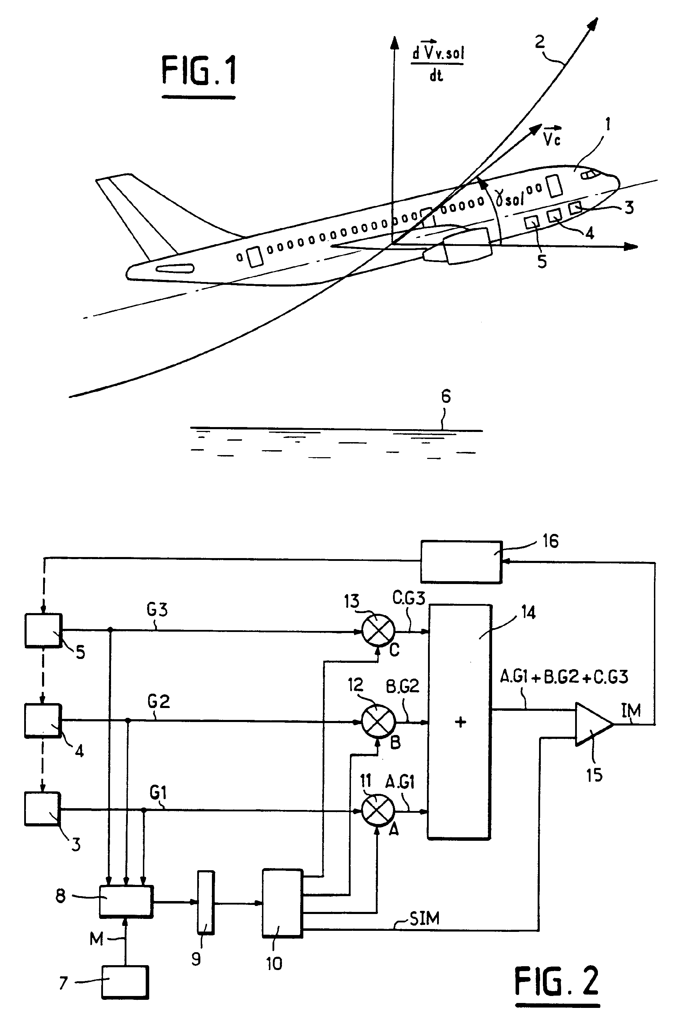

Un aéronef 1 en vol suit une certaine trajectoire 2, comme représenté à la figure 1, et comporte un premier indicateur 3 apte à fournir une première grandeur G1 qui est la composante verticale d 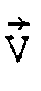 v.sol/dt du vecteur représentant l'accélération subie par l'aéronef 1, tandis qu'un deuxième indicateur 4 mesure une deuxième grandeur G2 qui est l'angle de pente γ sol de ladite trajectoire 2 par rapport à l'horizontale, et qu'un troisième indicateur 5 mesure une troisième grandeur G3 significative du risque de décrochage, c'est-à-dire la vitesse de l'aéronef 1 par rapport au sol 6 ou l'angle d'incidence α de l'aéronef 1. La vitesse est représentée par un vecteur 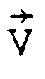 c tangent à la trajectoire 2 et, par convention, les valeurs correspondant aux vecteurs orientés vers le haut ont un signe positif.

La marge de manoeuvrabilité M est réduite lorsque cet aéronef 1 a une faible énergie cinétique , c'est-à-dire lorsque sa vitesse est faible, ou qu'il a une trajectoire 2 orientée vers le sol 6, que son nez est orienté vers le sol 6, et que le vecteur accélération verticale d 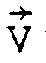 v.sol/dt est orienté vers le sol 6. Sur cette figure 1, on voit ainsi que la trajectoire 2 est ascendante, ce qui est favorable pour cette marge de manoeuvrabilité M, et que cette trajectoire 2 est arrondie vers le haut, ce qui donne un vecteur accélération verticale d 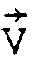 v.sol/dt dirigé vers le haut, donc favorable à cette marge de manoeuvrabilité M ; de même, l'angle d'incidence α est positif, ce qui lui est favorable. L'influence de ces diverses grandeurs peut alors être prise en compte pour fournir un signal d'insuffisance de manoeuvrabilité IM indiquant au pilote que la marge de manoeuvrabilité M est en-dessous d'un certain seuil d'insuffisance de manoeuvrabilité SIM. De plus, ce signal d'insuffisance de manoeuvrabilité IM peut aussi contenir une information permettant d'avoir connaissance de l'amplitude de l'écart par rapport audit. seuil d'insuffisance de manoeuvrabilité SIM ou à toute autre valeur connue. Ainsi, le pilote n'est plus contraint de vérifier cycliquement la vitesse de l'aéronef 1, et il est averti lorsqu'il y a passage au-dessous dudit seuil d'insuffisance de manoeuvrabilité SIM.

Le schéma synoptique de la figure 2 montre l'agencement des circuits permettant de mettre en oeuvre les diverses étapes du procédé pour déterminer le signal d'insuffisance de manoeuvrabilité IM d'un tel aéronef 1. Ainsi :
- dans une phase préparatoire, à l'aide d'une pluralité de N configurations de vol de l'aéronef 1, simulées, calculées ou réelles,
a) on détermine des relations linéaires entre une première grandeur G1, une deuxième grandeur G2 et une troisième grandeur G3, respectivement relatives à l'accélération verticale d 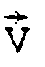 v.sol/dt dudit aéronef 1, à l'angle de pente γsol de la trajectoire 2 dudit aéronef 1 par rapport à l'horizontale, et au risque de décrochage dudit aéronef 1, en pondérant relativement entre elles les valeurs instantanées respectives G1i, G2i et G3i (i : entier = 1,...,j, k,...,N) de ces trois grandeurs par des coefficients respectifs A, B et C tels que, lorsque la marge de manoeuvrabilité est estimée être insuffisante pour les valeurs considérées G1j, G2j et G3j desdites trois grandeurs, la somme pondérée Dj = A.G1j + B.G2j + C.G3j soit inférieure à toute autre somme pondérée Dk = A.G1k + B.G2k + C.G3k pour laquelle la marge de manoeuvrabilité est estimée être suffisante pour des valeurs G1T, G2k et G3k desdites grandeurs G1,G2,G3. Il est à noter que l'un des coefficients A,B,C peut être pris égal à 1, ce qui évite d'avoir à effectuer la multiplication correspondante, puisque la pondération entre lesdites trois grandeurs est relative, et qu'il suffit donc de pondérer deux desdites grandeurs par rapport à la troisième non pondérée de façon absolue, sans que cela restreigne la généralité du présent exposé ;
b) on choisit une valeur DO de seuil d'insuffisance de manoeuvrabilité SIM supérieure à toute valeur d'une somme pondérée Dj pour laquelle la marge de manoeuvrabilité est insuffisante, et inférieure à toute valeur Dk pour laquelle la marge de manoeuvrabilité est suffisante.

Pour ce faire, le dispositif de mise en oeuvre dudit procédé comprend un premier indicateur 3, tel un accéléromètre, fournissant ladite première grandeur G1, un deuxième indicateur 4, tel un gyroscope, fournissant ladite deuxième grandeur G2, et un troisième indicateur 5, tel un indicateur de vitesse de l'aéronef 1 par rapport au sol 6 ou un indicateur d'angle d'incidence α, fournissant ladite troisième grandeur G3 relative au risque de décrochage dudit aéronef 1.

Par ailleurs, un opérateur 7 fournit, à une mémoire de données 8, une information de manoeuvrabilité, et cette mémoire de données mémorise les diverses valeurs desdites grandeurs, et transmet ces valeurs à un calculateur 9 fournissant, à une mémoire d'exploitation 10, les coefficients de pondération A, B et C pour, respectivement, lesdites première, deuxième et troisième grandeurs G1, G2 et G3 ainsi que la valeur DO du seuil d'insuffisance de manoeuvrabilité SIM.

Puis, dans une phase d'exploitation en vol, on effectue les étapes suivantes :
c) on mesure simultanément les valeurs instantanées desdites première G1, deuxième G2 et troisième grandeurs G3 et on calcule la somme desdites première G1, deuxième G2 et troisième grandeurs G3 respectivement pondérées par les coefficients de pondération A, B et C. Ceci est réalisé en utilisant :
- un premier multiplieur 11, recevant, dudit premier indicateur 3, ladite première grandeur G1, un deuxième multiplieur 12 recevant, dudit deuxième indicateur 4, ladite deuxième grandeur G2, et un troisième multiplieur 13, recevant, dudit troisième indicateur 5, ladite troisième grandeur G3, et multipliant respectivement lesdites première, deuxième et troisième grandeurs G1, G2 et G3 par le premier, deuxième et troisième coefficient A, B et C, issu de ladite mémoire d'exploitation 10, et fournissant, respectivement, un premier, deuxième et troisième résultat, lesdits premier multiplieur 11, deuxième multiplieur 12 et troisième multiplieur 13 étant chacun constitués d'un amplificateur opérationnel ou d'un multiplieur numérique ;
- un additionneur 14 algébrique, recevant respectivement, sur une première, deuxième et troisième entrée, lesdits premier, deuxième et troisième résultats, et fournissant une somme pondérée des valeurs appliquées sur lesdites première, deuxième et troisième entrées, ledit additionneur 14 étant constitué d'amplificateurs opérationnels ou d'un ou plusieurs additionneurs numériques.

Dans l'étape suivante :
d) on compare ladite somme à ladite valeur DO de seuil d'insuffisance de manoeuvrabilité SIM et on engendre un signal d'insuffisance de manoeuvrabilité IM si ladite somme est inférieure à ladite valeur DO de seuil d'insuffisance de manoeuvrabilité SIM. Ceci est réalisé en utilisant :
- un comparateur 15 recevant, sur une première entrée, ladite somme, et, sur une seconde entrée, la valeur DO de seuil d'insuffisance de manoeuvrabilité SIM, issue de ladite mémoire d'exploitation 10, et fournissant, en sortie, un signal d'insuffisance de manoeuvrabilité IM si ladite somme diffère de ladite valeur DO de seuil d'insuffisance de manoeuvrabilité SIM, dans un sens tel que, lorsque la vitesse dudit aéronef 1 par rapport au sol 6 décroît, la valeur de ladite somme s'éloigne de la valeur DO de seuil d'insuffisance de manoeuvrabilité SIM, ledit comparateur 15 étant constitué d'un amplificateur opérationnel ou d'un comparateur numérique.

De cette façon, on détermine une relation linéaire très simple entre lesdites trois grandeurs, ce qui permet ensuite, par un calcul aisé et rapide, de déterminer si l'aéronef 1 a une marge de manoeuvrabilité M suffisante.

Le signal d'insuffisance de manoeuvrabilité IM est transmis au pilote de l'aéronef 1, pour qu'il rétablisse une configuration de vol telle que ledit signal d'insuffisance de manoeuvrabilité IM disparaisse. Pour faciliter le pilotage, il est alors possible de fournir au pilote une information supplémentaire, sous forme d'une valeur indiquant l'écart entre la valeur instantanée du signal d'insuffisance de manoeuvrabilité IM et ladite valeur DO de seuil d'insuffisance de manoeuvrabilité SIM. Le pilote a ainsi une information en retour lui indiquant l'efficacité d'une manoeuvre qu'il vient d'entamer pour rétablir des conditions de vol normales, c'est-à-dire faire disparaître l'insuffisance de manoeuvrabilité.

Par ailleurs, l'information fournie par ledit signal d'insuffisance de manoeuvrabilité IM peut être transmise à un dispositif de commande de vol 16, de façon qu'il réagisse à la place du pilote, ce dernier restant évidemment maître de repasser en pilotage manuel. Ce dispositif de commande de vol 16 peut aussi recevoir lesdites grandeurs G1, G2 et G3 servant à élaborer le signal d'insuffisance de manoeuvrabilité IM, ou, tout au moins, connaît l'effet des commandes qu'il émet sur le sens de variation desdites grandeurs. De ce fait, recevant le signal d'insuffisance de manoeuvrabilité IM, il peut agir sur les commandes qu'il émet pour faire varier les valeurs desdites grandeurs dans un sens tendant à supprimer l'insuffisance de manoeuvrabilité. Ceci constitue un système asservi à seuil. L'action dudit dispositif de commande de vol 16 peut ne porter que sur un nombre limité desdites grandeurs, par exemple celles dont la valeur dépasse une limite prédéterminée propre à chaque grandeur, ou bien porter sur toutes lesdites grandeurs en cas de net dépassement, dans le sens défavorable, dudit seuil d'insuffisance de manoeuvrabilité SIM.

Ce dispositif de commande de vol peut aussi recevoir plusieurs tels signaux d'insuffisance de manoeuvrabilité IM, chacun provenant d'une comparaison à un seuil d'insuffisance de manoeuvrabilité SIM différent de celui des autres, ou, plus simplement, recevoir un signal d'insuffisance de manoeuvrabilité IM correspondant à une valeur DO nulle de seuil d'insuffisance de manoeuvrabilité SIM. Dans ce dernier cas, la valeur de ce signal d'insuffisance de manoeuvrabilité IM peut être choisie comme étant égale à la valeur de ladite somme, et de même signe. Ainsi, même lorsque la marge de manoeuvrabilité M est suffisante, l'amplitude de cette valeur de signal d'insuffisance de manoeuvrabilité IM peut servir au dispositif de commande de vol pour l'émission de commandes tendant à maximiser l'amplitude dudit signal d'insuffisance de manoeuvrabilité IM, c'est-à-dire optimiser, de ce point de vue, les conditions de vol, lesdites commandes n'agissant que dans une plage de variation des diverses dites grandeurs qui est compatible avec les consignes affichées par le pilote, dans la mesure où une marge de manoeuvrabilité M suffisante est conservée.

Par ailleurs, il est possible d'affiner la signification du signal d'insuffisance de manoeuvrabilité IM en utilisant plus de trois grandeurs, parmi les quatre grandeurs citées ou d'autres choisies à bon escient.

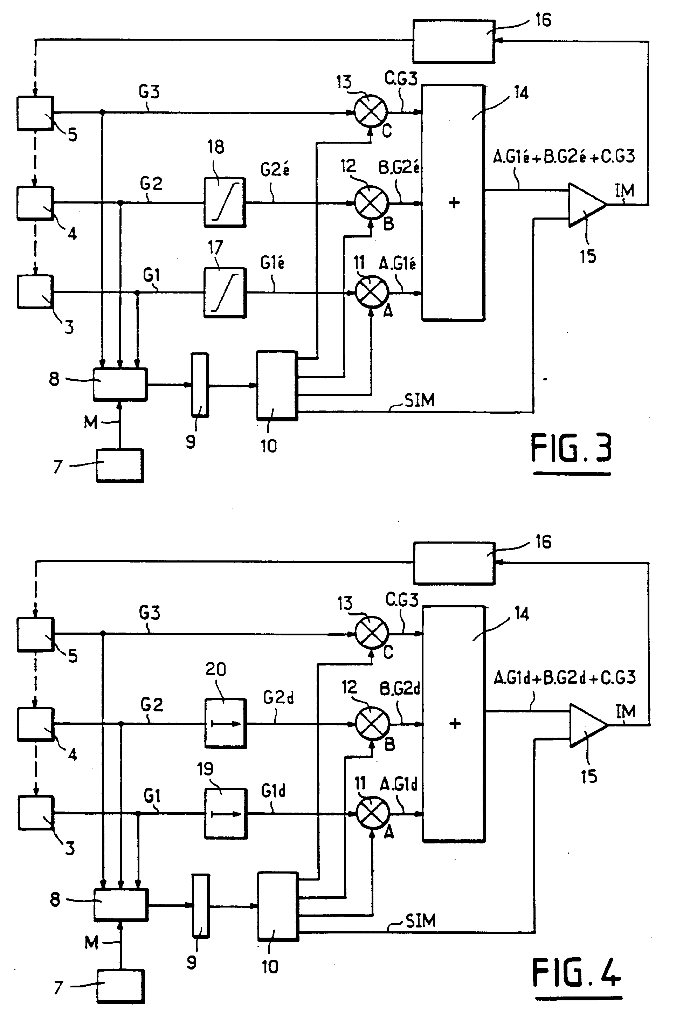

Selon une première variante, représentée sur la figure 3, afin d'éviter qu'une desdites grandeurs ne fournisse une indication trop favorable audit signal d'insuffisance de manoeuvrabilité IM, qui masquerait une insuffisance critique fournie par au moins l'une des deux autres grandeurs, ou qui correspondrait à des conditions de vol s'écartant trop de la normale, la valeur prise en compte pour certaines de ces grandeurs est limitée à une plage de variation plus faible que celle du signal issu de l'indicateur correspondant. De même, la plage de variation des valeurs des grandeurs prises en compte, et donnant une indication trop défavorable pour le signal d'insuffisance de manoeuvrabilité IM, peut être limitée, de façon que, en tel cas, les autres grandeurs puissent encore influer sur la valeur dudit signal d'insuffisance de manoeuvrabilité IM, et informer le pilote de l'évolution favorable ou défavorable de la valeur du signal d'insuffisance de manoeuvrabilité IM, lorsque ce signal d'insuffisance de manoeuvrabilité IM contient une information relative à l'écart entre sa valeur instantanée et une valeur de référence. Le choix éventuel d'un écrêtage d'un côté ou de l'autre de la plage de variation, comme exposé ci-dessus, est effectué pour chaque grandeur.

Pour ce faire, la valeur de la première grandeur G1, qui est la valeur de l'accélération verticale d 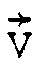 v.sol/dt de l'aéronef 1, peut subir un écrêtage, limitant la plage de variation de cette accélération verticale lorsque celle-ci est supérieure à la valeur d'un seuil haut prédéterminé de l'accélération verticale, seuil haut qui peut avoir un signe positif ou négatif. Ainsi, les accélérations verticales correspondant à une trajectoire 2 de l'aéronef 1 à courbure qui serait tournée vers le haut, ayant donc un effet favorable sur la marge de manoeuvrabilité M, peuvent ne pas être totalement prises en compte, mais limitées à ladite valeur de seuil haut de l'accélération verticale. Inversement, une accélération verticale correspondant à une trajectoire 2 à courbure tournée vers le bas a un effet défavorable sur cette marge de manoeuvrabilité M, et peut n'être prise en compte que jusqu'à une certaine valeur de seuil bas prédéterminée de l'accélération verticale.

De même, la deuxième grandeur G2, qui est l'angle de pente γ sol de la trajectoire 2 de l'aéronef 1 par rapport à l'horizontale, peut, selon le même principe, n'être prise en compte que dans une plage limitée de sa variation. La marge de manoeuvrabilité M est d'autant plus importante que cet angle de pente γ sol est grand, c'est-à-dire que la trajectoire 2 est ascendante avec cependant une limite haute. On peut alors ne plus prendre en compte les variations de cet angle de pente γ sol de la trajectoire 2 par rapport à l'horizontale lorsqu'il dépasse un certain seuil haut prédéterminé d'angle de pente γ sol de la trajectoire 2. De même, on peut ne pas prendre en compte ses variations lorsqu'il descend en-dessous d'un certain seuil bas d'angle de pente γ sol de la trajectoire 2, car, alors, la valeur du signal d'insuffisance de manoeuvrabilité IM arriverait en butée de la dynamique prévue pour ce signal et masquerait les influences des variations des autres grandeurs.

La troisième grandeur G3, qui est la vitesse de l'aéronef 1 par rapport au sol 6, ou l'angle d'incidence α de l'aéronef 1, peut, de la même façon, et pour les mêmes motifs, être prise en compte selon une plage limitée d'un ou des deux côtés de sa plage de variation. Dans l'exemple donné, non limitatif, cette limitation n'est pas appliquée.

Pour réaliser ces écrêtages, on utilise les circuits représentés sur la figure 3 qui ont la même fonction que ceux de même référence représentés sur la figure 2, ainsi que des circuits supplémentaires permettant de mettre en oeuvre ladite première variante, selon laquelle certaines desdites première, deuxième et troisième grandeurs G1, G2 et G3 sont écrêtées d'un côté ou des deux côtés de leur plage de variation. Dans cet exemple, non limitatif, l'écrêtage est effectué sur lesdites première grandeur G1 et deuxième grandeur G2 seulement. Pour ce faire, lesdites première et deuxième grandeurs G1 et G2, respectivement issues desdits premier indicateur 3 et deuxième indicateur 4, sont respectivement appliquées à un premier écrêteur 17 et à un deuxième écrêteur 18 qui limitent la variation de la valeur desdites grandeurs, d'un côté ou de l'autre, ou des deux, ces limites étant préalablement définies et mémorisées sous forme analogique dans l'écrêteur même ou sous forme numérique dans la mémoire d'exploitation 10. Les sorties respectives desdits premier écrêteur 17 et deuxième écrêteur 18 fournissent une valeur écrêtée G1é de la première grandeur G1 et une valeur écrêtée G2é de la deuxième grandeur G2 et sont appliquées respectivement, à la différence de ce qui est représenté sur la figure 2, sur ledit premier multiplieur 11 et deuxième multiplieur 12, en lieu et place desdites première grandeur G1 et deuxième grandeur G2.

Ces écrêteurs peuvent être des circuits analogiques, tels qu'un montage comportant une ou deux diodes, ou des circuits numériques.

Ce premier écrêtage et ce deuxième écrêtage sont indépendants l'un de l'autre, comme expliqué précédemment, c'est-à-dire que l'un ou l'autre peut être absent ou bien écrêter d'un seul côté alors que l'autre écrête du côté opposé ou des deux côtés de la plage de variation de la grandeur qu'il reçoit. On obtient ainsi une somme pondérée A.G1é + B.G2é + C.G3. Cette figure 3 montre que l'écrêtage est effectué sur les valeurs des grandeurs qui servent à calculer ladite somme pondérée ; le même écrêtage peut être effectué sur les valeurs des grandeurs servant à la détermination initiale des coefficients de pondération, soit en utilisant les valeurs écrêtées précédemment, soit en effectuant un écrêtage identique, au moyen du calculateur 9, lors de la détermination desdits coefficients de pondération.

Le fait de limiter la dynamique de variation desdites grandeurs prises en compte permet alors d'éviter qu'une grandeur ne fasse partir en butée la valeur du signal d'insuffisance de manoeuvrabilité, ce qui masquerait, au pilote, l'effet des variations des deux autres grandeurs sur la variation dudit signal d'insuffisance de manoeuvrabilité IM, et ne lui permettrait donc pas d'obtenir une information en retour lors de sa manoeuvre pour rétablir des conditions normales de vol. Or, ceci peut être particulièrement important, surtout dans une telle situation où la valeur d'une desdites grandeurs est extrême, ce qui peut signifier une configuration de vol particulièrement délicate.

Sur la figure 4 sont représentés les circuits permettant de réaliser une seconde variante du traitement effectué en regard de la figure 2, cette seconde variante pouvant coexister avec ladite première variante exposée ci-dessus. Lesdites première grandeur G1, deuxième grandeur G2 et troisième grandeur G3, issues respectivement des premier indicateur 3, deuxième indicateur 4 et troisième indicateur 5, subissent, pour certaines, un décalage de zéro qui leur est propre. Ainsi, dans l'exemple non limitatif représenté sur la figure 4, seules les première grandeur G1 et deuxième grandeur G2 subissent un tel décalage du zéro. Ceci a pour effet d'optimiser la prise en compte de l'influence relative de chacune des trois grandeurs.

Cette figure 4 montre que le décalage du zéro est effectué sur les valeurs des grandeurs qui servent à calculer ladite somme pondérée ; le même décalage du zéro peut aussi être effectué sur les valeurs des grandeurs servant à la détermination initiale des coefficients de pondération, soit en utilisant les valeurs à zéro décalé précédemment déterminées, soit en effectuant un décalage identique dans le calculateur 9, lors de la détermination desdits coefficients de pondération.

Pour mettre en oeuvre cette seconde variante, on utilise les circuits montrés sur la figure 4 qui ont les mêmes fonctions que les circuits de même référence de la figure 2, ainsi que des circuits supplémentaires spécifiques pour ladite seconde variante. Un premier circuit de décalage 19 et un deuxième circuit de décalage 20 reçoivent les valeurs desdites première grandeur G1 et deuxième grandeur G2 et fournissent respectivement une première grandeur décalée G1d et une deuxième grandeur décalée G2d qui sont respectivement appliquées aux premier multiplieur 11 et au deuxième multiplieur 12, ce qui permet de mettre en oeuvre ladite seconde variante. Ces premier circuit de décalage 19 et deuxième circuit de décalage 20 sont constitués d'un montage analogique ajoutant une tension de polarisation à la valeur de la grandeur présentée sous forme de tension analogique, ou sont constitués d'un additionneur numérique algébrique, décalant, de la valeur voulue, la valeur de la grandeur considérée. Dans ce dernier cas, la valeur de décalage peut être mémorisée dans la mémoire d'exploitation 10.

Dans le cas où un écrêtage est aussi effectué, comme exposé ci-dessus, cet écrêtage est effectué avant ou après décalage du zéro, et les valeurs des seuils d'écrêtage sont éventuellement décalées pour tenir compte de ce décalage. Il est bien évident que, pour ces deux variantes, l'écrêtage ou le décalage du zéro peuvent être effectués après la pondération de la grandeur considérée, en corrigeant en conséquence les valeurs des seuils d'écrêtage et de décalage du zéro. On obtient ainsi une somme pondérée A.G1d + B.G2d + C.G3.

## Revendications

1. Procédé pour la signalisation d'une insuffisance de manoeuvrabilité d'un aéronef (1), caractérisé en ce que :
- dans une phase préparatoire, à l'aide d'une pluralité de N configurations de vol de l'aéronef (1), simulées, calculées ou réelles,
a) on détermine des relations linéaires entre une première, une deuxième et une troisième grandeur (G1, G2 et G3), respectivement relatives à l'accélération verticale dudit aéronef (1), à l'angle de pente de la trajectoire (2) dudit aéronef (1) par rapport à l'horizontale, et au risque de décrochage dudit aéronef (1), en pondérant relativement entre elles les valeurs instantanées respectives G1i, G2i et G3i, avec (i = 1,2,...,j,k,...,N), de ces trois grandeurs par des coefficients respectifs A, B et C tels que, lorsque la marge de manoeuvrabilité est estimée être insuffisante pour les valeurs considérées G1j, G2j et G3j desdites trois grandeurs, la somme pondérée Dj = A.G1j + B.G2j + C.G3j soit inférieure à toute autre somme pondérée Dk = A.G1k + B.G2k + C.G3k pour laquelle la marge de manoeuvrabilité est estimée être suffisante pour des valeurs G1k, G2k et G3k desdites grandeurs G1, G2 et G3 ;
b) on choisit une valeur DO de seuil d'insuffisance de manoeuvrabilité (SIM) supérieure à toute valeur Dj d'une somme pondérée pour laquelle la marge de manoeuvrabilité est insuffisante, et inférieure à toute valeur Dk pour laquelle la marge de manoeuvrabilité est suffisante ;
- puis, dans une phase d'exploitation en vol :
c) on mesure simultanément les valeurs instantanées desdites première, deuxième et troisième grandeurs (G1,G2,G3) et on calcule la somme desdites première, deuxième et troisième grandeurs (G1,G2,G3) respectivement pondérées par les coefficients de pondération A, B et C ; et
d) on compare ladite somme à ladite valeur DO de seuil d'insuffisance de manoeuvrabilité (SIM) et on engendre un signal d'insuffisance de manoeuvrabilité (IM) si ladite somme est inférieure à ladite valeur DO de seuil d'insuffisance de manoeuvrabilité (SIM).

2. Procédé selon la revendication 1,
caractérisé en ce que ladite troisième grandeur (G3) représente la vitesse de l'aéronef (1) par rapport au sol (6).

3. Procédé selon la revendication 1,
caractérisé en ce que ladite troisième grandeur (G3) représente l'angle d'incidence (α) de l'aéronef (1).

4. Procédé selon l'une quelconque des revendications 1 à 3,
caractérisé en ce que l'un desdits coefficients de pondération (A,B,C) est égal à 1.

5. Procédé selon l'une quelconque des revendications 1 à 4,
caractérisé en ce qu'on décale le zéro de certaines desdites première, deuxième et troisième grandeur (G1,G2,G3).

6. Procédé selon l'une quelconque des revendications 1 à 5,
caractérisé en ce qu'on écrête certaines desdites première, deuxième et troisième grandeurs (G1,G2,G3) d'au moins un côté de leur plage de variation.

7. Procédé selon l'une quelconque des revendications 1 à 6,
caractérisé en ce que ledit signal d'insuffisance de manoeuvrabilité (IM) contient une information indiquant l'amplitude de ladite insuffisance de manoeuvrabilité.

8. Procédé selon l'une quelconque des revendications 1 à 7,
caractérisé en ce que ledit signal d'insuffisance de manoeuvrabilité est représentatif de la marge quantifiée de manoeuvrabilité ou est un signal "tout ou rien" indiquant l'insuffisance de manoeuvrabilité.

9. Application du procédé de signalisation d'insuffisance de manoeuvrabilité d'un aéronef (1), selon l'une quelconque des revendications 1 à 8, à l'asservissement d'un dispositif de commande de vol (16) d'un aéronef (1),
caractérisée en ce que ledit signal d'insuffisance de manoeuvrabilité (IM) est utilisé par ledit dispositif de commande de vol (16).

10. Application du procédé de signalisation d'insuffisance de manoeuvrabilité d'un aéronef (1), selon la revendication 9,
caractérisée en ce que ledit dispositif de commande de vol (16) agit essentiellement sur celles desdites grandeurs (G1,G2,G3) dont la valeur s'écarte nettement d'une valeur limite propre prédéterminée.

11. Application du procédé de signalisation d'insuffisance de manoeuvrabilité d'un aéronef (1), selon la revendication 9 ou 10,
caractérisée en ce que ledit dispositif de commande de vol (16) agit sur lesdites grandeurs (G1,G2,G3) pour optimiser la marge de manoeuvrabilité.

12. Dispositif de signalisation d'insuffisance de manoeuvrabilité d'un aéronef (1) comportant un premier indicateur (3) apte à fournir une première grandeur (G1) relative à l'accélération verticale dudit aéronef (1), un deuxième indicateur (4), apte à fournir une deuxième grandeur (G2) relative à l'angle de pente de la trajectoire (2) dudit aéronef (1) par rapport à l'horizontale, et un troisième indicateur (5) apte à fournir une troisième grandeur (G3) relative au risque de décrochage dudit aéronef (1),
caractérisé en ce qu'il comporte :
- un premier, un deuxième et un troisième multiplieur (11,12,13), recevant respectivement lesdites première, deuxième et troisième grandeurs (G1,G2,G3), aptes à multiplier respectivement ladite grandeur reçue par un premier, un deuxième et un troisième coefficient prédéterminé, et aptes à fournir, respectivement, un premier, un deuxième et un troisième résultat ;
- un additionneur (14) algébrique, recevant respectivement, sur trois entrées, lesdits premier, deuxième et troisième résultats et apte à fournir une somme correspondant à la sommation des valeurs appliquées auxdites trois entrées ;
- un comparateur (15) recevant, sur une première entrée, ladite somme, et, sur une seconde entrée, une valeur (DO) prédéterminée de seuil d'insuffisance de manoeuvrabilité (SIM), et apte à fournir, en sortie, un signal d'insuffisance de manoeuvrabilité (IM) si ladite somme diffère de ladite valeur (DO) prédéterminée de seuil d'insuffisance de manoeuvrabilité (SIM), dans un sens tel que, lorsque la vitesse dudit aéronef (1) par rapport au sol (6) décroît, la valeur de ladite somme s'éloigne de ladite valeur (DO) de seuil d'insuffisance de manoeuvrabilité (SIM).

13. Dispositif de signalisation d'insuffisance de manoeuvrabilité d'un aéronef (1) comportant un premier indicateur (3) apte à fournir une première grandeur (G1) relative à l'accélération verticale dudit aéronef (1), un deuxième indicateur (4), apte à fournir une deuxième grandeur (G2) relative à l'angle de pente de la trajectoire (2) dudit aéronef (1) par rapport à l'horizontale, et un troisième indicateur (5) apte à fournir une troisième grandeur (G3) relative au risque de décrochage dudit aéronef (1),
caractérisé en ce qu'il comporte :
- un premier et un deuxième multiplieurs (11,12), recevant respectivement une parmi lesdites première, deuxième et troisième grandeurs (G1,G2,G3), aptes à multiplier respectivement ladite grandeur reçue par un premier et un deuxième coefficient prédéterminé, et aptes à fournir, respectivement, un premier résultat et un deuxième résultat ;
- un additionneur (14) algébrique, recevant respectivement, sur trois entrées, lesdits premier et deuxième résultats et celle, parmi lesdites première, deuxième et troisième grandeurs (G1,G2,G3), que ne reçoivent pas lesdits premier et deuxième multiplieurs (11,12), et apte à fournir une somme correspondant à la sommation des valeurs appliquées auxdites entrées ;
- un comparateur (15) recevant, sur une première entrée, ladite somme, et, sur une seconde entrée, une valeur (DO) prédéterminée de seuil d'insuffisance de manoeuvrabilité (SIM), et apte à fournir, en sortie, un signal d'insuffisance de manoeuvrabilité (IM) si ladite somme diffère de ladite valeur (DO) prédéterminée de seuil d'insuffisance de manoeuvrabilité (SIM), dans un sens tel que, lorsque la vitesse dudit aéronef (1) par rapport au sol (6) décroît, la valeur de ladite somme s'éloigne de ladite valeur (DO) de seuil d'insuffisance de manoeuvrabilité (SIM).

14. Dispositif de signalisation d'insuffisance de manoeuvrabilité d'un aéronef (1) selon la revendication 12 ou 13,
caractérisé en ce qu'il comporte au moins un écrêteur (17,18) apte à limiter la plage de variation de l'une desdites première, deuxième ou troisième grandeur (G1,G2,G3).

15. Dispositif de signalisation d'insuffisance de manoeuvrabilité d'un aéronef (1) selon l'une quelconque des revendications 12 à 14,
caractérisé en ce qu'il comporte au moins un circuit de décalage (19,20) apte à décaler la référence du zéro de l'une desdites première, deuxième ou troisième grandeur (G1,G2,G3).

## Patentansprüche

1. Verfahren zur Anzeige einer unzulänglichen Manövrierfähigkeit eines Luftfahrzeugs (1), dadurch gekennzeichnet, daß:
- in einer Vorbereitungsphase mit Hilfe einer Vielzahl von N simulierten, berechneten oder tatsächlichen Flugkonfigurationen des Luftfahrzeugs (1)
a) lineare Beziehungen zwischen einer ersten, einer zweiten und einer dritten Größe (G1, G2 und G3) für die vertikale Beschleunigung des Luftfahrzeugs (1), den Neigungswinkel der Flugbahn (2) des Luftfahrzeugs (1) gegenüber der Horizontalen bzw. das Abkipprisiko des Luftfahrzeugs (1) bestimmt werden, indem die entsprechenden momentanen Werte G1i, G2i und G3i mit (i = 1,2,...,j,k,...,N) dieser drei Größen durch entsprechende Koeffizienten A, B und C im Verhältnis zueinander gewichtet werden, so daß, wenn der Manövrierfähigkeitsspielraum bei den entsprechenden Werten G1j, G2j und G3j der drei Größen für unzulänglich gehalten wird, die gewichtete Summe Dj = A.G1j + B.G2j + C.G3j kleiner als jede weitere gewichtete Summe Dk = A.G1k + B.G2k + C.G3k ist, bei der der Manövrierfähigkeitsspielraum bei Werten G1k, G2k und G3k der Größen G1, G2 und G3 für ausreichend gehalten wird;
b) ein Wert DO der Schwelle unzulängliche Manövrierfähigkeit (SIM) gewählt wird, der größer als jeder Wert Dj einer gewichteten Summe, bei dem der Manövrierfähigkeitsspielraum unzureichend ist, und kleiner als jeder Wert Dk ist, bei dem der Manövrierfähigkeitsspielraum ausreichend ist;
- dann in einer Betriebssphase während des Fluges:
c) gleichzeitig die momentanen Werte der ersten, zweiten und dritten Größe (G1,G2,G3) gemessen werden und die Summe der ersten, zweiten und dritten Größe (G1,G2,G3), die jeweils mit den Wichtungskoeffizienten A, B und C gewichtet werden, berechnet wird, und
d) die Summe mit dem Wert DO der Schwelle unzulängliche Manövrierfähigkeit (SIM) verglichen und ein Signal unzulängliche Manövrierfähigkeit (IM) erzeugt wird, wenn die Summe kleiner als der Wert DO der Schwelle unzulängliche Manövrierfähigkeit (SIM) ist.

2. Verfahren nach Anspruch 1,
dadurch gekennzeichnet, daß die dritte Größe (G3) die Geschwindigkeit des Luftfahrzeugs (1) gegenüber dem Boden (6) darstellt.

3. Verfahren nach Anspruch 1,
dadurch gekennzeichnet, daß die dritte Größe (G3) den Anstellwinkel (α) des Luftfahrzeugs (1) darstellt.

4. Verfahren nach einem der Ansprüche 1 bis 3,
dadurch gekennzeichnet, daß einer der Wichtungskoeffizienten (A,B,C) gleich 1 ist.

5. Verfahren nach einem der Ansprüche 1 bis 4,
dadurch gekennzeichnet, daß der Nullpunkt einiger Größen der ersten, zweiten und dritten Größe (G1,G2,G3) verschoben wird.

6. Verfahren nach einem der Ansprüche 1 bis 5,
dadurch gekennzeichnet, daß einige Größen der ersten, zweiten und dritten Größe (G1,G2,G3) auf mindestens einer Seite ihres Änderungsbereichs begrenzt werden.

7. Verfahren nach einem der Ansprüche 1 bis 6,
dadurch gekennzeichnet, daß das Signal unzulängliche Manövrierfähigkeit (IM) eine Information enthält, die den Umfang der Unzulänglichkeit der Manövrierfähigkeit angibt.

8. Verfahren nach einem der Ansprüche 1 bis 7,
dadurch gekennzeichnet, daß das Signal unzulängliche Manövrierfähigkeit für den quantifizierten Manövrierfähigkeitsspielraum repräsentativ ist oder ein "Alles-oder-Nichts"-Signal ist, das die Unzulänglichkeit der Manövrierfähigkeit angibt.

9. Anwendung des Verfahrens zur Anzeige der unzulänglichen Manövrierfähigkeit eines Luftfahrzeugs (1) nach einem der Ansprüche 1 bis 8, auf die Regelung einer Flugsteuerungsvorrichtung (16) eines Luftfahrzeugs (1),
dadurch gekennzeichnet, daß das Signal unzulängliche Manövrierfähigkeit (IM) von der Flugsteuerungsvorrichtung (16) genutzt wird.

10. Anwendung des Verfahrens zur Anzeige der unzulänglichen Manövrierfähigkeit eines Luftfahrzeugs (1) nach Anspruch 9,
dadurch gekennzeichnet, daß die Flugsteuerungsvorrichtung (16) im wesentlichen auf diejenigen Größen (G1,G2,G3) wirkt, deren Wert deutlich von einem vorbestimmten Eigengrenzwert abweicht.

11. Anwendung des Verfahrens zur Anzeige der unzulänglichen Manövrierfähigkeit eines Luftfahrzeugs (1) nach Anspruch 9 oder 10,
dadurch gekennzeichnet, daß die Flugsteuerungsvorrichtung (16) auf die Größen (G1,G2,G3) zur Optimierung des Manövrierfähigkeitsspielraums einwirkt.

12. Vorrichtung zur Anzeige einer unzulänglichen Manövrierfähigkeit eines Luftfahrzeugs (1) mit einem ersten Anzeigegerät (3) zur Abgabe einer ersten Größe (G1) für die vertikale Beschleunigung des Luftfahrzeugs (1), einem zweiten Anzeigegerät (4) zur Abgabe einer zweiten Größe (G2) für den Neigungswinkel der Flugbahn (2) des Luftfahrzeugs (1) gegenüber der Horizontalen und einem dritten Anzeigegerät (5) zur Abgabe einer dritten Größe (G3) für das Abkipprisiko des Luftfahrzeugs (1),
dadurch gekennzeichnet, daß sie umfaßt:
- einen ersten, einen zweiten und einen dritten Multiplizierer (11,12,13), an die jeweils die erste, zweite und dritte Größe (G1,G2,G3) gelangen, die die erhaltene Größe jeweils mit einem ersten, zweiten und dritten vorbestimmten Koeffizienten multiplizieren und ein erstes, zweites bzw. drittes Ergebnis abgeben können;
- einen algebraischen Addierer (14), dessen drei Eingängen das erste, zweite bzw. dritte Ergebnis aufgegeben wird und der eine Summe entsprechend der Summierung der an die drei Eingänge angelegten Werte abgeben kann;
- einen Komparator (15), an dessen ersten Eingang die Summe und an dessen zweiten Eingang ein vorbestimmter Wert (DO) der Schwelle unzulängliche Manövrierfähigkeit (SIM) gelangen und der am Ausgang ein Signal unzulängliche Manövrierfähigkeit (IM) abgeben kann, wenn die Summe vom vorbestimmten Wert (DO) der Schwelle unzulängliche Manövrierfähigkeit (SIM) in einer solchen Richtung abweicht, daß bei abnehmender Geschwindigkeit des Luftfahrzeugs (1) gegenüber dem Boden (6) die Abweichung zwischen Wert der Summe und Wert (DO) der Schwelle unzulängliche Manövrierfähigkeit (SIM) zunimmt.

13. Vorrichtung zur Anzeige einer unzulänglichen Manövrierfähigkeit eines Luftfahrzeugs (1) mit einem ersten Anzeigegerät (3) zur Abgabe einer ersten Größe (G1) für die vertikale Beschleunigung des Luftfahrzeugs (1), einem zweiten Anzeigegerät (4) zur Abgabe einer zweiten Größe (G2) für den Neigungswinkel der Flugbahn (2) des Luftfahrzeugs (1) gegenüber der Horizontalen und einem dritten Anzeigegerät (5) zur Abgabe einer dritten Größe (G3) für das Abkipprisiko des Luftfahrzeugs (1),
dadurch gekennzeichnet, daß sie umfaßt:
- einen ersten und einen zweiten Multiplizierer (11,12), an die jeweils eine der ersten, zweiten und dritten Größe (G1,G2,G3) gelangt, die die erhaltene Größe jeweils mit einem ersten und einem zweiten vorbestimmten Koeffizienten multiplizieren und ein erstes bzw. zweites Ergebnis abgeben können;
- einen algebraischen Addierer (14), dessen drei Eingängen das erste bzw. zweite Ergebnis und diejenige der ersten, zweiten und dritten Größe (G1,G2,G3) aufgegeben werden, die nicht an den ersten und zweiten Multiplizierer (11,12) gelangt, und der eine Summe entsprechend der Summierung der an die drei Eingänge angelegten Werte abgeben kann;
- einen Komparator (15), an dessen ersten Eingang die Summe und an dessen zweiten Eingang ein vorbestimmter Wert (DO) der Schwelle unzulängliche Manövrierfähigkeit (SIM) gelangen und der am Ausgang ein Signal unzulängliche Manövrierfähigkeit (IM) abgeben kann, wenn die Summe vom vorbestimmten Wert (DO) der Schwelle unzulängliche Manövrierfähigkeit (SIM) in einer solchen Richtung abweicht, daß bei abnehmender Geschwindigkeit des Luftfahrzeugs (1) gegenüber dem Boden (6) die Abweichung zwischen Wert der Summe und Wert (DO) der Schwelle unzulängliche Manövrierfähigkeit (SIM) zunimmt.

14. Vorrichtung zur Anzeige einer unzulänglichen Manövrierfähigkeit eines Luftfahrzeugs (1) nach Anspruch 12 oder 13,
dadurch gekennzeichnet, daß sie mindestens einen Begrenzer (17,18) hat, mit dem der Änderungsbereich einer der ersten, zweiten oder dritten Größe (G1,G2,G3) begrenzt wird.

15. Vorrichtung zur Anzeige einer unzulänglichen Manövrierfähigkeit eines Luftfahrzeugs (1) nach Anspruch 12 bis 14,
dadurch gekennzeichnet, daß sie mindestens einen Verschiebeschaltkreis (19,20) hat, mit dem die Nullreferenz einer der ersten, zweiten oder dritten Größe (G1,G2,G3) verschoben werden kann.

## Claims

1. Method for signalling insufficient manoeuvrability of an aircraft (1), characterized in that:
- in a preparatory phase, with the aid of a plurality of N simulated, calculated or real flight configurations of the aircraft (1),
a) linear relationships between a first, a second and a third quantity (G1, G2 and G3) are determined, relative respectively to the vertical acceleration of the said aircraft (1), to the slope angle of the trajectory (2) of the said aircraft (1) with respect to the horizontal, and to the risk of stalling the said aircraft (1), by weighting, relatively to each other, the respective instantaneous values G1i, G2i and G3i, with (i = 1,2,...,j,k,...,N) of these three quantities by respective coefficients A, B and C which are such that, when the manoeuvrability margin is estimated to be insufficient for the G1j, G2j and G3j values in question of the said three quantities, the weighted sum Dj = A.G1j + B.G2j + C.G3j is less than every other weighted sum Dk = A.G1k + B.G2k + C.G3k for which the manoeuvrability margin is estimated to be sufficient for values G1k, G2k and G3k of the said quantities G1, G2 and G3;
b) a value DO of insufficient manoeuvrability threshold (SIM) is chosen, greater than every value Dj of a weighted sum for which the manoeuvrability margin is insufficient, and less than every value Dk for which the manoeuvrability margin is sufficient;
- then, in an in-flight utilization phase:
c) the instantaneous values of the said first, second and third quantities (G1, G2, G3) are simultaneously measured and the sum of the said first, second and third quantities (G1, G2, G3) are calculated, weighted respectively by the weighting coefficients A, B and C; and
d) the said sum is compared to the said value DO of insufficient manoeuvrability threshold (SIM) and an insufficient manoeuvrability signal (IM) is generated if the said sum is less than the said value DO of insufficient manoeuvrability threshold (SIM).

2. Method according to Claim 1, characterized in that the said third quantity (G3) represents the speed of the aircraft (1) with respect to the ground (6).

3. Method according to Claim 1, characterized in that the said third quantity (G3) represents the incidence angle (α) of the aircraft (1).

4. Method according to any one of Claims 1 to 3, characterized in that one of the said weighting coefficients (A, B, C) is equal to 1.

5. Method according to any one of Claims 1 to 4, characterized in that the zero of some of the said first, second and third quantities (G1, G2, G3) is offset.

6. Method according to any one of Claims 1 to 5, characterized in that the peaks of some of the said first, second and third quantities (G1, G2, G3) are clipped on at least one side of their range of variation.

7. Method according to any one of Claims 1 to 6, characterized in that the said insufficient manoeuvrability signal (IM) contains an item of information indicating the amplitude of the said insufficient manoeuvrability.

8. Method according to any one of Claims 1 to 7, characterized in that the said insufficient manoeuvrability signal is representative of the quantified manoeuvrability margin or is an "all-or-nothing" signal indicating insufficient manoeuvrability.

9. Application of the method of signalling insufficient manoeuvrability of an aircraft (1) according to any one of Claims 1 to 8, to the slaving of a flight control device (16) of an aircraft (1), characterized in that the said insufficient manoeuvrability signal (IM) is used by the said flight control device (16).

10. Application of the method of signalling insufficient manoeuvrability of an aircraft (1) according to Claim 9, characterized in that the said flight control device (16) acts essentially on those of the said quantities (G1, G2, G3) whose value clearly deviates from a particular predetermined limit value.

11. Application of the method of signalling insufficient manoeuvrability of an aircraft (1) according to Claim 9 or 10, characterized in that the said flight control device (16) acts on the said quantities (G1, G2, G3) in order to optimize the manoeuvrability margin.

12. Device for signalling insufficient manoeuvrability of an aircraft (1), comprising a first indicator (3) able to supply a first quantity (G1) relating to the vertical acceleration of the said aircraft (1), a second indicator (4) able to supply a second quantity (G2) relating to the slope angle of the trajectory (2) of the said aircraft (1) with respect to the horizontal, and a third indicator (5) able to supply a third quantity (G3) relating to the risk of stalling the said aircraft (1), characterized in that it comprises:
- a first, a second and a third multiplier (11,12,13), receiving respectively the said first, second and third quantities (G1, G2, G3), able to multiply respectively the said quantity received by a first, a second and a third predetermined coefficient, and able to supply, respectively, a first, a second and a third result;
- an algebraic adder (14), receiving respectively, on three inputs, the said first, second and third results and able to supply a sum corresponding to the summing of the values applied at the said three inputs;
- a comparator (15) receiving, on a first input, the said sum, and, on a second input, a predetermined value (DO) of insufficient manoeuvrability threshold (SIM), and able to supply, at its output, an insufficient manoeuvrability signal (IM) if the said sum differs from the said predetermined value (DO) of insufficient manoeuvrability threshold (SIM), in a sense such that, when the speed of the said aircraft (1) with respect to the ground (6) decreases, the value of the said sum diverges from the said value (DO) of insufficient manoeuvrability threshold (SIM) .

13. Device for signalling insufficient manoeuvrability of an aircraft (1) comprising a first indicator (3) able to supply a first quantity (G1) relating to the vertical acceleration of the said aircraft (1), a second indicator (4) able to supply a second quantity (G2) relating to the slope angle of the trajectory (2) of the said aircraft (1) with respect to the horizontal, and a third indicator (5) able to supply a third quantity (G3) relating to the risk of stalling the said aircraft (1), characterized in that it comprises :
- a first and a second multipliers (11,12), respectively receiving one among the said first, second and third quantities (G1, G2, G3), able to multiply respectively the said quantity received by a first and a second predetermined coefficient, and able to supply, respectively, a first result and a second result;
- an algebraic adder (14), receiving respectively, on three inputs, the said first and second results and that one, among the said first, second and third quantities (G1, G2, G3) that the said first and second multipliers (11,12) do not receive, and able to supply a sum corresponding to the summing of the values applied at the said inputs;
- a comparator (15) receiving, on a first input, the said sum, and, on a second input, a predetermined value (DO) of insufficient manoeuvrability threshold (SIM), and able to supply, at its output, an insufficient manoeuvrability signal (IM) if the said sum differs from the said predetermined value (DO) of insufficient manoeuvrability threshold (SIM), in a sense such that, when the speed of the said aircraft (1) with respect to the ground (6) decreases, the value of the said sum diverges from the said value (DO) of insufficient manoeuvrability threshold (SIM).

14. Device for signalling insufficient manoeuvrability of an aircraft (1) according to Claim 12 or 13, characterized in that it comprises at least one peak clipper (17,18) able to limit the range of variation of one of the said first, second or third quantities (G1, G2, G3).

15. Device for signalling insufficient manoeuvrability of an aircraft (1) according to any one of Claims 12 to 14, characterized in that it comprises at least one offset circuit (19,20) able to offset the reference of the zero of one of the said first, second or third quantities (G1, G2, G3).
